# EUROPÄISCHE PATENTANMELDUNG

(11) **EP 3 944 402 A1**
(43) Veröffentlichungstag der Anmeldung: **26.01.2022**
(21) Anmeldenummer: 20187152.2
(22) Anmeldetag: 22.07.2020
(51) Int. Cl.: H01M 10/617

(54) **AKKUPACK FÜR EINE HANDWERKZEUGMASCHINE**

(71) Anmelder: Hilti Aktiengesellschaft, 9494 Schaan (LI)
(72) Erfinder: Ender, Moses, 9470 Buchs (CH); Martiny, Nora, 82211 Herrsching-Breitbrunn (DE); Stanger, Robert, 87600 Kaufbeuren (DE); Hauser, Klaus, 86830 Schwabmünchen (DE); Lepiorz, Matthias, 09112 Chemnitz (DE); Ziegler, Bernd, 86830 Schabmünchen (DE); Sax, Kathrin, 86937 Scheuring (DE)
(74) Vertreter: Hilti Aktiengesellschaft Corporate Intellectual Property

(57) **Zusammenfassung**

Akkupack für eine elektrische Handwerkzeugmaschine, wobei der Akkupack ein Gehäuse mit wenigstens einer darin angeordneten Pouch-Zelle aufweist, wobei parallel zu der Pouch-Zelle ein verformbares Druckausgleichselement derart angeordnet ist, dass das Druckausgleichselement einem Volumenanstieg der Pouch-Zelle nachgeben kann, wobei das Druckausgleichselement profiliert ist, so dass trotz des Volumenanstieg der Pouch-Zelle eine Konvektionsstrom entlang der Pouch-Zelle passieren kann.

## Beschreibung

Die vorliegende Erfindung betrifft ein Akkupack für eine elektrische Handwerkzeugmaschine, wobei der Akkupack ein Gehäuse mit wenigstens einer darin angeordneten Pouch-Zelle aufweist, wobei parallel zu der Pouch-Zelle ein verformbares Druckausgleichselement derart angeordnet ist, dass das Druckausgleichselement einem Volumenanstieg der Pouch-Zelle nachgeben kann.

Ein Akkupack eingangs genannter Art ist aus der EP 3 499 600 A1 bekannt.

WO 2014/206323 A1 offenbart ein Akkupack für ein tragbares Elektrowerkzeug, wobei das Akkupack eine Vielzahl von Akkuzellen aufweist, die innerhalb eines Gehäuses in einem elastisch verformbaren Gestell gestützt ist, welches mindestens einen Teil einer jeden Akkuzelle umgreift, wobei jedes elastisch verformbare Gestellseitenkanten in einer Weise beinhaltet, dass ein mechanischer Schutz für die Seiten einer jeden der Vielzahl von Akkuzellen bereitgestellt wird.

In der DE 10 2014 226 260 A1 wird ein Batteriezellgehäuse zur Aufnahme eines Elektrodenensembles einer Batteriezelle beschrieben mit einer Anode, einer Kathode und einem zwischen der Anode und der Kathode positionierten Elektrolyten, umfassend einen Bodenbereich, damit verbundene Seitenwände und einen das Batteriezellgehäuse an seiner Oberfläche verschließenden Deckel, wobei die Bodenfläche, mindestens eine Seitenwand oder der Deckel des Batteriezellgehäuses zumindest bereichsweise eine gewellte oder gefaltete Struktur aufweist, derart, dass das Batteriezellgehäuse bedingt durch die gewellte oder gefaltete Struktur elastisch eine Volumenänderung vollzieht.

Es ist Aufgabe der vorliegenden Erfindung, einen Akkupack zu schaffen, der die Grundlage für eine vergleichsweise hohe Betriebssicherheit bietet.

Die Aufgabe wird dadurch gelöst, dass das Druckausgleichselement profiliert ist, so dass trotz des Volumenanstieg der Pouch-Zelle eine Konvektionsstrom entlang der Pouch-Zelle passieren kann.

Die Erfindung schließt die Erkenntnis ein, dass bei Akkupacks des Standes der Technik die Akkuzellen unter Vorspannung in ein Harzhärtergemisch eingegossen oder durch durchgehend massive Druckausgleichselemente begrenzt sind. Es wurde beobachtet, dass es bei einem Volumenanstieg der Pouch-Zellen - dem sogenannten Swelling - zu mechanischen Spannungen und Kräften, insbesondere auf das Gehäuse kommen kann. Eine für die Pouch-Zellen vorteilhafte Konvektion entlang der Pouch-Zellen kommt im Zuge des Swellings typischerweise zum Erliegen. In besonders extremen Fällen können die Akkuzellen selbst, aber auch das Gehäuse des Akkupacks beschädigt werden. Das sogenannte Swelling ist bisher unvermeidlich und tritt insbesondere bei Pouch-Zellen durch die Pouch-Zellen-spezifische Zellalterung auf.

Dadurch, dass das Druckausgleichselement erfindungsgemäß profiliert ist, kann trotz des Volumenanstiegs der Pouch-Zelle ein Konvektionsstrom entlang der Pouch-Zelle passieren. Eine Kühlung der Pouchzelle - sei es durch freie und/oder durch erzwungene Konvektion - ist somit grundsätzlich weiter möglich. Mit anderen Worten kann mittels einer geeigneten Profilierung der Druckausgleichselemente erreicht werden, dass auch bei einem Aufschwellen der Pouch-Zelle offene Volumina (Hohlräume) verbleiben durch die der besagte Konvektionsstrom gelangen kann. Die Hohlräume dienen demnach vorzugsweise neben der Sicherstellung der elastischen Struktur (und somit der Aufnahme des Volumenzuwachses), auch der Kühlung der Pouch-Zelle. Der Akkupack kann einen elektrischen Lüfter aufweisen, der einen Konvektionsstrom entlang der Pouch-Zelle erzwingt.

In einer besonders bevorzugten Ausgestaltung ist das Druckausgleichselement ausschließlich innerhalb einer Projektionsfläche der Pouch-Zelle profiliert, die senkrecht zur einer Stapelrichtung der Pouch-Zelle orientiert ist. Dies erlaubt einen besonders kompakten Schichtaufbau. In einer besonders bevorzugten Ausgestaltung weist das Druckausgleichselement ein wellenförmiges, trapezförmiges oder ein wabenförmiges Profil auf. Das Druckausgleichselement kann ein tafelbergförmig-gerastertes Oberflächenprofil aufweisen. Es hat sich als vorteilhaft herausgestellt, wenn das Druckausgleichselement frei von einem durchgehend geraden Luftkanal ist, insbesondere frei von einem senkrecht zur Stapelrichtung durchgehend geraden Luftkanal. Das Druckausgleichselement kann ein oder mehrere Durchbrüche aufweisen um einen Konvektionsstrom zu begünstigen.

Es hat sich als vorteilhaft herausgestellt, wenn das Druckausgleichselement eine Material-Elastizität aufweist, die größer ist als eine Zell-Elastizität der Pouch-Zellen. In einer weiteren bevorzugten Ausgestaltung ist das Druckausgleichselement reversibel-elastisch verformbar. Vorzugsweise ist das Druckausgleichselement zumindest in Stapelrichtung reversibel-elastisch verformbar. In einer besonders bevorzugten Ausgestaltung ist das Druckausgleichselement ein Elastomer oder weist ein solches auf. Das Druckausgleichselement ist vorzugsweise ausgewählt aus der Gruppe: Polyurethan, Butadien-Kautschuk, Butylkautschuk, Ethylen-Propylen-DienKautschuk, Silicon-Kautschuk. In einer weiteren bevorzugten Ausgestaltung weist das Druckausgleichs-element ein Phasenwechsel-Material auf. So kann das Druckausgleichselement beispielsweise paraffingefüllte Kammern aufweisen, die temporäre Temperaturspitzen innerhalb des Akkupacks - die typischerweise bei einer hohen Stromentnahme auftreten - abpuffern können.

In einer besonders bevorzugten Ausgestaltung ist das Druckausgleichselement in Form wenigstens eines Einlegeelements bereitgestellt, das zwischen den Pouch-Zellen eingelegt oder einzulegen ist. Ist eine Mehrzahl oder eine Vielzahl von Pouch-Zellen vorgesehen, so befindet sich vorzugsweise je ein Einlegeelement zwischen benachbarten Pouch-Zellen. Vorzugsweise sind die Einlegeelemente flächig ausgebildet, wobei eine Oberfläche im Wesentlichen gleich groß sein kann wie eine Oberfläche einer jeweiligen Pouch-Zelle. Es hat sich als vorteilhaft herausgestellt, wenn das Druckausgleichselement die Pouch-Zelle nicht überlappt.

In einer weiteren bevorzugten Ausgestaltung ist das Druckausgleichselement zwischen wenigstens einer der Pouch-Zellen und einer Wand des Gehäuses befindlich. Ist das Druckausgleichselement in Form wenigstens eines Einlegeelements bereitgestellt, so kann dieses zwischen einer äußeren Pouch-Zelle und der Wand des Gehäuses angeordnet sein.

Es hat sich als besonders vorteilhaft herausgestellt, dass jede der Pouch-Zellen beidseitig an das Druckausgleichselement angrenzt. Besonders bevorzugt sind die Pouch-Zellen als Lithium-Polymerzellen ausgeführt. Es hat sich als vorteilhaft herausgestellt, wenn das Druckausgleichselement ein elektrischer Isolator ist. In einer besonders bevorzugten Ausgestaltung ist die Leerlaufspannung des Akkupacks auf 60 V Gleichspannung begrenzt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

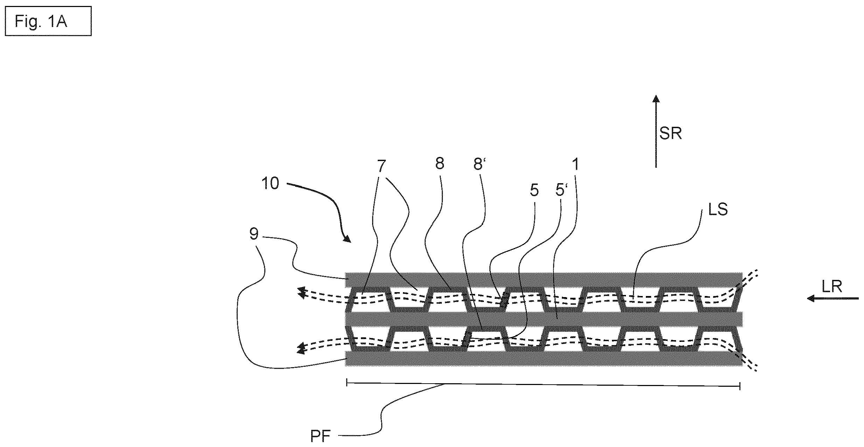

- Fig. 1A: ein erstes bevorzugtes Ausführungsbeispiel eines erfindungsgemäßen Akkupacks in einem intakten Zustand, wobei das Druckausgleichselement in Form eines Einlegeelements bereitgestellt ist, und

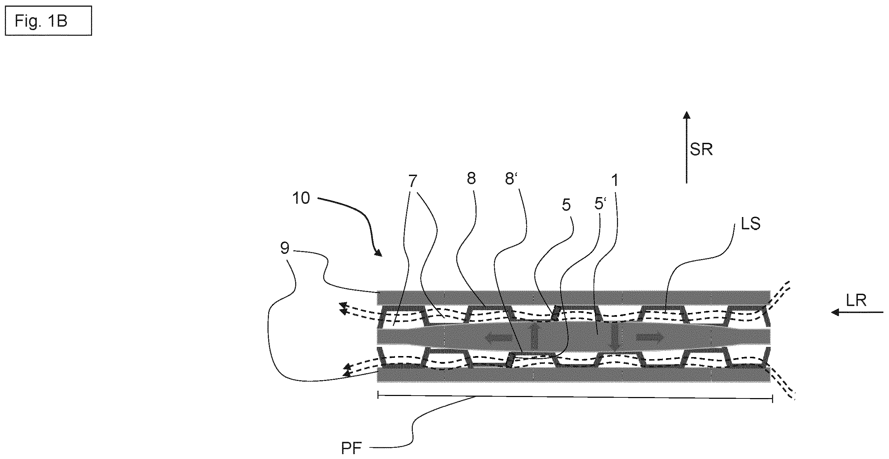

- Fig. 1B: den Akkupack in einem aufgeblähten Zustand.

### Ausführungsbeispiele:

Eine schematische Darstellung eines besonders bevorzugten Ausführungsbeispiels eines erfindungsgemäßen Akkupacks 10 ist in Fig. 1A, 1B dargestellt.

Der Akkupack 10 dient der elektrischen Versorgung einer hier nicht dargestellten elektrischen Handwerkzeugmaschine. Der Akkupack 10 weist ein Gehäuse - hier beispielhaft durch zwei Gehäusewände 9 versinnbildlicht - mit einer darin angeordneten Pouch-Zelle 1 auf. In anderen Ausführungsbeispielen kann eine Mehrzahl von Pouch-Zellen vorgesehen sein. Fig. 1A zeigt den Akkupack 10 mit intakter Pouch-Zelle 1. In Fig. 1B ist der Akkupack 10 mit aufgeblähter Pouch-Zelle 1 dargestellt.

Zwischen der Pouch-Zelle 1 und einer jeweiligen Gehäusewände 9 ist jeweils ein Druckausgleichselement 8, 8' befindlich. Die Druckausgleichselemente 8, 8' sind im in Fig. 1A, 1B dargestellten Ausführungsbeispiel als zumindest in Stapelrichtung SR reversibel-elastisch verformbare Einlegeelemente ausgebildet, so dass die Druckausgleichselemente 8, 8' einem Volumenanstieg der Pouch-Zelle 1 (vgl. Fig. 1B) nachgeben können. Wie der Fig. 1 entnommen werden kann, erstrecken sich die Druckausgleichselemente 8, 8' in ihrer Längsrichtung LR parallel zu einer Stapelrichtung SR der Pouch-Zelle 1. Aus der Zusammenschau der Fig. 1 A und B wird ersichtlich, dass beide Druckausgleichselemente 8, 8' - unabhängig vom Zustand der Pouch-Zelle 1 - stets zumindest abschnittsweise mit der Pouch-Zelle 1 in Kontakt stehen.

Erfindungsgemäß sind die Druckausgleichselemente 8, 8' profiliert ausgebildet, so dass trotz des Volumenanstieg der Pouch-Zelle 1 (vgl. Fig. 1B) eine Konvektionsstrom KS beidseitig entlang der Pouch-Zelle 1 passieren kann. Beispielhaft weisen die Druckausgleichselemente 8, 8' ein trapezförmiges Profil auf. Aufgrund der trapezförmigen Profilierung der Druckausgleichselemente 8, 8' verbleiben auch bei einem Aufschwellen der Pouch-Zelle (vgl. Fig. 1B) offene Volumina 7 durch die der besagte Konvektionsstrom KS gelangen kann. Es sei darauf hingewiesen, dass aufgrund der der zweidimensionalen Darstellung der Fig. 1A, 1B vorteilhafterweise in den Druckausgleichselemente 8, 8' ausgebildete Durchbrüche 5, 5' lediglich gestrichelt dargestellt sind. Die Durchbrüche 5, 5' ermöglichen oder begünstigen den Konvektionsstrom KS.

Gut zu erkennen in Fig. 1A, 1B ist, dass die Druckausgleichselement 8 ausschließlich in einer Projektionsfläche PF (dargestellt als Linie aufgrund der zweidimensionalen Darstellung) der Pouch-Zelle 1 profiliert. Dabei verläuft die Projektionsfläche PF senkrecht zur der Stapelrichtung SR der Pouch-Zelle 1 ist. Insbesondere ist die Pouch-Zelle 1 an ihren jeweiligen kurzen Stirnseiten (links und rechts in Fig. 1A, 1B) frei von Druckausgleichselementen.

### Bezugszeichenliste

- 1: Pouch-Zelle
- 5, 5': Durchbruch
- 7: offenes Volumen
- 8, 8': Druckausgleichselement
- 9, 9': Gehäusewand
- 10: Akkupack

- KS: Konvektionsstrom
- LR: Längsrichtung
- PF: Projektionsfläche
- SR: Stapelrichtung

## Patentansprüche

1. Akkupack (10) für eine elektrische Handwerkzeugmaschine (100), wobei der Akkupack (10) ein Gehäuse (9) mit wenigstens einer darin angeordneten Pouch-Zelle (1) aufweist, wobei parallel zu der Pouch-Zelle (1) ein verformbares Druckausgleichselement (8) derart angeordnet ist, dass das Druckausgleichselement (8) einem Volumenanstieg der Pouch-Zelle (1) nachgeben kann,
**dadurch gekennzeichnet, dass** das Druckausgleichselement (8) profiliert ist, so dass trotz des Volumenanstieg der Pouch-Zelle (1) eine Konvektionsstrom entlang der Pouch-Zelle (1) passieren kann.

2. Akkupack (10) nach Anspruch 1,
**dadurch gekennzeichnet, dass** das Druckausgleichselement (8) ausschließlich innerhalb einer Projektionsfläche der Pouch-Zelle (1) profiliert ist, die senkrecht zur einer Stapelrichtung der Pouch-Zelle (1) orientiert ist.

3. Akkupack (10) nach Anspruch 1 oder 2,
**dadurch gekennzeichnet, dass** das Druckausgleichselement (8) ein wellenförmiges, trapezförmiges oder ein wabenförmiges Profil aufweist.

4. Akkupack (10) nach einem der vorangehenden Ansprüche,
**dadurch gekennzeichnet, dass** das Druckausgleichselement (8) senkrecht zur Stapelrichtung (SR) frei von einem durchgehend geraden Luftkanal ist.

5. Akkupack (10) nach einem der vorangehenden Ansprüche,
**dadurch gekennzeichnet, dass** das Druckausgleichselement (8) reversibel-elastisch verformbar ist.

6. Akkupack (10) nach einem der vorangehenden Ansprüche,
**dadurch gekennzeichnet, dass** das Druckausgleichselement (8) eine Material-Elastizität aufweist, die größer ist als eine Zellen-Elastizität der Pouch-Zelle (1).

7. Akkupack (10) nach einem der vorangehenden Ansprüche,
**dadurch gekennzeichnet, dass** das Druckausgleichselement (8) ein Elastomer ist oder ein solches aufweist, vorzugsweise aus der Gruppe: Polyurethan, Butadien-Kautschuk, Butylkautschuk, Ethylen-Propylen-Dien- Kautschuk, Silicon-Kautschuk.

8. Akkupack (10) nach einem der vorangehenden Ansprüche,
**dadurch gekennzeichnet, dass** das Druckausgleichselement (8) in Form wenigstens eines Einlegeelements bereitgestellt ist, das zwischen den Pouch-Zellen (1, 2) eingelegt ist.

9. Akkupack (10) nach einem der vorangehenden Ansprüche,
**dadurch gekennzeichnet, dass** Druckausgleichselement (8) zwischen wenigstens einer der Pouch-Zellen (1, 2) und einer Wand des Gehäuses (9) befindlich ist.

10. Akkupack (10) nach einem der vorangehenden Ansprüche,
**dadurch gekennzeichnet, dass** eine Mehrzahl von Pouch-Zellen (1) vorgesehen ist und jede der Pouch-Zellen (1) an das Druckausgleichselement (8) angrenzt.

11. Akkupack (10) nach einem der vorangehenden Ansprüche,
**dadurch gekennzeichnet, dass** das Druckausgleichselement (8) ein Phasenwechsel-Material aufweist.

12. Akkupack (10) nach einem der vorangehenden Ansprüche,
**dadurch gekennzeichnet, dass** die Pouch-Zellen (1, 2) als Li-Polymerzellen ausgeführt sind.

13. Akkupack (10) nach einem der vorangehenden Ansprüche,
**dadurch gekennzeichnet, dass** die Leerlaufspannung des Akkupacks (10) auf 60 Volt Gleichspannung begrenzt ist.
